(19) Europäisches Patentamt
European Patent Office
Office européen des brevets

(11) EP 0 886 662 B1

(12) EUROPÄISCHE PATENTSCHRIFT

(45) Veröffentlichungstag und Bekanntmachung des Hinweises auf die Patenterteilung:
**28.09.2005 Patentblatt 2005/39**

(21) Anmeldenummer: **97914195.9**

(22) Anmeldetag: **06.03.1997**

(51) Int Cl.$^7$: **C08G 67/02**, B01J 31/24

(86) Internationale Anmeldenummer:
**PCT/EP1997/001129**

(87) Internationale Veröffentlichungsnummer:
**WO 1997/034943 (25.09.1997 Gazette 1997/41)**

(54) **THERMOPLASTISCHE ELASTOMERE KOHLENMONOXID/OLEFIN-COPOLYMERE**
THERMOPLASTIC ELASTOMERIC CARBON MONOXIDE/OLEFIN COPOLYMERS
COPOLYMERES MONOXYDE DE CARBONE/OLEFINE ELASTOMERES THERMOPLASTIQUES

(84) Benannte Vertragsstaaten:
**BE DE ES FR GB IT NL**

(30) Priorität: **15.03.1996 DE 19610358**

(43) Veröffentlichungstag der Anmeldung:
**30.12.1998 Patentblatt 1998/53**

(73) Patentinhaber: **BASF Aktiengesellschaft**
**67056 Ludwigshafen (DE)**

(72) Erfinder:
- **MÜLLER, Hans-Joachim**
  **D-67269 Grünstadt (DE)**
- **HORN, Hans, Christoph**
  **D-67245 Lambsheim (DE)**
- **SPAHL, Roland**
  **D-64653 Lorsch (DE)**
- **RIEGER, Bernhard**
  **D-89075 Ulm (DE)**
- **ABU-SURRAH, Adnan, S.**
  **D-89075 Ulm (DE)**

(56) Entgegenhaltungen:
**EP-A- 0 501 576** **EP-A- 0 516 238**
**US-A- 3 835 123** **US-A- 5 352 767**
**US-A- 5 384 393**

- **MACROMOLECULES, Bd. 29, Nr. 13, 17.Juni 1996, Seite 4806/4807 XP000589989 ABU-SURRAH A S ET AL: "CONTROL OF MOLECULAR WEIGHT IN ALPHA-OLEFIN-CARBON MONOXIDE ALTERNATING COPOLYMERIZATION. A WAY TO HIGH MOLECULAR WEIGHT PROPENE-CARBON MONOXIDE THERMOPLASTIC ELASTOMERS"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 886 662 B1

## Beschreibung

Die vorliegende Erfindung betrifft lineare, thermoplastische, elastomere Copolymere aus Kohlenmonoxid und olefinisch ungesättigten Verbindungen mit alternierender Sequenz der Wiederholeinheiten und einem mittleren Molekulargewicht Mw der Copolymeren im Bereich von 80000 bis 1200000, wobei binäre, lineare, alternierende Kohlenmonoxid/Ethylencopolymere ausgeschlossen sind.

Außerdem betrifft die vorliegende Erfindung ein Verfahren zur Herstellung derartiger Copolymerer, die Verwendung der Copolymeren zur Herstellung von Fasern, Folien und Formkörpern, sowie die Fasern, Folien und Formkörper aus den Copolymeren und Metallkomplexe (Ia) wie hiernach definiert.

Kohlenmonoxid/Ethylencopolymere finden in jüngster Zeit Interesse als technische Kunststoffe zur Herstellung von Artikeln mit relativ hohem Schmelzpunkt, wie beispielsweise Zahnräder. In der Regel sind Kohlenmonoxid-Copolymere mit Ethylen als Comonomer sehr hart und spröde und wenig oder gar nicht schlagzäh, sodaß sie für viele Anwendungsgebiete, in denen diese Eigenschaften wünschenswert sind, nicht in Frage kommen.

In der US 5,352,767 werden alternierende, elastomere Copolymerisate aus Kohlenmonoxid und α-Olefinen beschrieben die mit einem Katalysatorsystem, welches kationische Metallkomplexe der Gruppe VIIIB des Periodensystenms der Elemente und Aktivatoren auf der Basis von primären und sekundären Alkoholen enthält, hergestellt wurden.

Die hierin beschriebenen Kohlenmonoxid/Propylen-, n-Buten- oder n-Hexencopolymere haben aber nur ein mittleres Molekulargewicht Mw bis zu 50000, welches keine thermoplastisch elastomeren Eigenschaften gewährleistet und außerdem für Werkstoffanwendungen zu gering ist.

Ferner ist zur Aktivierung der Polymerisationskatalysatoren ein großer Überschuß an alkoholischem Aktivator nötig.

Aufgabe der vorliegenden Erfindung war es daher Copolymere aus Kohlenmonoxid und olefinisch ungesättigten Verbindungen zur Verfügung zu stellen, die die genannten Nachteile nicht, oder nur in untergeordnetem Maße aufweisen und insbesondere hohe mittlere Molekulargewichte Mw (80000 und mehr)und sowohl thermoplastische als auch elastomere Eigenschaften aufweisen.

Der vorliegenden Erfindung lag ferner die Aufgabe zugrunde ein Verfahren zur Herstellung dieser Polymeren zur Verfügung zu stellen in welchem ein Katalysator mitverwendet wird, der ohne große Mengen Aktivator, nur bis zu 500 Moläquivalenten, bezogen auf das Katalysatormetall, oder am besten ganz ohne Aktivator polymerisationsaktiv ist.

Demgemäß wurden lineare, thermoplastische, elastomere Copolymere aus Kohlenmonoxid und olefinisch ungesättigten Verbindungen mit alternierender Sequenz der Wiederholeinheiten und einem mittleren Molekulargewicht Mw der Copolymeren im Bereich von 80000 bis 1200000, wobei binäre, lineare, alternierende Kohlenmonoxid/Ethylencopolymere ausgeschlossen sind, gefunden.

Außerdem wurde ein Verfahren zur Herstellung von linearen, thermoplastischen, elastomeren Copolymeren aus Kohlenmonoxid und olefinisch ungesättigten Verbindungen mit alternierender Sequenz der Wiederholeinheiten und einem mittleren Molekulargewicht Mw der Copolymeren im Bereich von 80000 bis 1200000, wobei binäre, lineare, alternierende Kohlenmonoxid/Ethylencopolymere ausgeschlossen sind, durch Copolymerisation von Kohlenmonoxid mit olefinisch ungesättigten Verbindungen in einem praktisch alkohol- oder wasserfreien Polymerisationsmedium in Gegenwart eines Katalysators dessen aktive Masse gebildet wird aus

A) einem Metallkomplex der allgemeinen Formel (I)

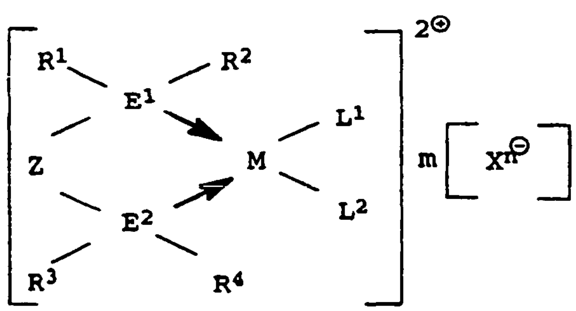
(I)

in der die Substituenten und Indizes folgende Bedeutung haben:

M ein Metall aus der Gruppe VIIIB des Periodensy- stems der Elemente

$E^1$, $E^2$ ein Element aus der Gruppe VA des Periodensystems der Elemente,

Z eine verbrückende Struktureinheit aus einer, zwei, drei oder vier Substruktureinheiten von Elementen der Gruppe IVA, VA, VIA des Periodensystems der Elemente,

$R^1$ bis $R^4$ Substituenten, ausgewählt aus der Gruppe bestehend aus $C_1$- bis $C_{20}$-Kohlenstofforganischen und $C_3$- bis $C_{30}$-Siliciumorganischen Resten, wobei die Reste ein Element oder mehrere Elemente der Gruppe IVA, VA, VIA und VIIA des Periodensystems der Elemente ent- halten können,

$L^1$, $L^2$ formal ungeladene Lewis-Basenliganden

X ein- oder zweiwertige Anionen

m, n 1 oder 2

wobei m x n= 2

B) einer Aktivatorkomponente, welche eine Hydroxylgruppe im Molekül enthält,

wobei man 0 bis 500 Moläquivalente, bezogen auf M in (I), der Aktivatorkomponente B) verwendet, gefunden.

Außerdem wurde ein Verfahren zur Herstellung von linearen, thermoplastischen, elastomeren Copolymeren aus Kohlenmonoxid und olefinisch ungesättigten Verbindungen mit alternierender Sequenz der Wiederholeinheiten und einem mittleren Molekulargewicht Mw der Copolymeren im Bereich von 80000 bis 1200000, wobei binäre, lineare, alternierende Kohlenmonoxid/Ethylencopolymere ausgeschlossen sind, durch Copolymerisation von Kohlenmonoxid mit olefinisch ungesättigten Verbindungen in einem praktisch alkohol- oder wasserfreien Polymerisationsmedium in Gegenwart eines Katalysators dessen aktive Masse gebildet wird aus

a) einem Salz eines Metalls M der Gruppe VIII B des Periodensystems der Elemente,

b) einer Verbindung oder mehreren Verbindungen ausgewählt aus der Gruppe der Protonensäuren und Lewissäuren,

c) einer Chelatverbindung der allgemeinen Formel (II)

$$R^1R^2E^1\text{-}Z\text{-}E^2R^3R^4 \qquad \text{(II)}$$

in der die Substituenten und Indizes folgende Bedeutung haben:

$E^1$, $E^2$ ein Element aus der Gruppe VA des Periodensy- stems der Elemente,

Z eine verbrückende Struktureinheit aus einer, zwei, drei oder vier Substruktureinheiten von Elementen der Gruppe IVA, VA, VIA des Perioden- systems der Elemente,

$R^1$ bis $R^4$ Substituenten ausgewählt aus der Gruppe der $C_1$- bis $C_{20}$-Kohlenstofforganischen und $C_3$- bis $C_{30}$-Siliciumorganischen Reste, wobei die Reste ein Element oder mehrere Elemente der Gruppe IVA, VA, VIA und VIIA des Periodensystems der Elemente enthalten können,

B) einer Aktivatorkomponente, welche eine Hydroxylgruppe im Molekül enthält,

wobei man 0 bis 500 Moläquivalente, bezogen auf M in (I), der Aktivatorkomponente B) verwendet,
sowie die Verwendung der eingangs definierten linearen, thermoplastischen, elastomeren Copolymeren zur Herstellung von Fasern, Folien und Formkörpern, die Fasern, Folien und Formkörper aus den eingangs definierten linearen, thermoplastischen, elastomeren Copolymeren und Metallkomplexe der allgemeinen Formel (Ia)

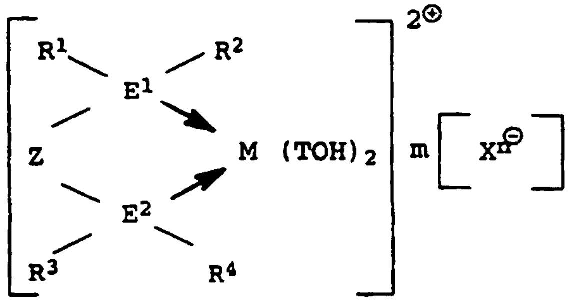

(Ia)

in der die Substituenten und Indizes folgende Bedeutung haben:

| | |
|---|---|
| M | ein Metall aus der Gruppe VIIIB des Periodensystems der Elemente |
| $E^1$,$E^2$ | ein Element aus der Gruppe VA des Periodensystems der Elemente, |
| Z | eine verbrückende Struktureinheit aus einer, zwei, drei oder vier Substruktureinheiten von Elementen der Gruppe IVA, VA, VIA des Periodensystems der Elemente, |
| $R^1$ bis $R^4$ | Substituenten, ausgewählt aus der Gruppe bestehend aus $C_1$- bis $C_{20}$-Kohlenstofforganischen und $C_3$- bis $C_{30}$-Siliciumorganischen Resten, wobei die Rest ein Ele- ment oder mehrere Elemente der Gruppe IVA, VA, VIA und VIIA des Periodensystems der Elemente enthalten können, |
| TOH | Ligand mit T= Wasserstoff, $C_1$- bis $C_{15}$-Kohlenstofforga- nischer Rest mit einer lewisbasischen Gruppe, |
| X | ein- oder zweiwertige Anionen |
| m, n | 1 oder 2 |

wobei m x n= 2
gefunden.

Die erfindungsgemäßen Copolymere sind aus Einheiten aufgebaut, die auf die Monomeren Kohlenmonoxid und einer olefinisch ungesättigten Verbindung oder mehreren olefinisch ungesättigten Verbindungen zurückgehen, wobei in binären Copolymerisaten Ethylen ausgeschlossen ist, da es nach gegenwärtigem Kenntnisstand lediglich spröde Materialien liefert.

Die Monomere werden im allgemeinen alternierend in das Copolymer eingebaut.

Als olefinisch ungesättigte Verbindungen kommen grundsätzlich alle Monomere dieser Verbindungsklasse in Betracht.

Bevorzugt sind in binären Kohlenmonoxidcopolymeren $C_3$- bis $C_{20}$-Alkene oder -Alk-1-ene beispielsweise Propen, 1-Buten, 2-Buten, 1-Penten, 1-Hexen, 1-Octen, 1-Nonen, 1-Decen, 1-Dodecen, 1-Hexadecen, 1-Octadecen, 1-Eicosen und hauptsächlich $C_3$- bis $C_{10}$-Alk-1-ene, wie Propen, 1-Buten, 1-Hexen, 1-Octen oder 1-Decen.

Ganz besonders bevorzugte binäre Copolymere sind Kohlenmonoxid/Propencopolymere.

Außer den bereits genannten, eignen sich als olefinisch ungesättigte Verbindungen konjugierte oder isolierte $C_4$- bis $C_{20}$-Diene, beispielsweise 1,3-Butadien, 1,5-Hexadien, Norbornadien, sowie daneben $C_3$- bis $C_{20}$-Cycloolefine wie Cyclopenten, Cyclohexen, Norbornen und seine Derivate.

Unter den geeigneten olefinisch ungesättigten aromatischen Monomeren sei in erster Linie Styrol genannt.

Bedeutung als polare, olefinisch ungesättigte Verbindungen haben ferner α-β-ungesättigte Carbonylverbindungen wie Acrylsäure und Methacrylsäure sowie deren Derivate, darunter insbesondere die Nitrile, die Amide und die $C_1$-$C_6$-Alkylester, beispielsweise Ethylacrylat, n-Butylacrylat, tert.-Butylacrylat, Methylmethacrylat sowie Acrylnitril.

Weitere geeignete olefinisch ungesättigte Monomere sind Vinylchlorid, Vinylacetat, Vinylpropionat, Maleinsäureanhydrid und N-Vinylpyrrolidon.

Als Monomere für nicht-binäre Copolymere, insbesondere ternäre Copolymere, aus Kohlenmonoxid und olefinisch ungesättigten Verbindungen kommen die bereits genannten in Frage, jetzt allerdings auch Ethylen als Comonomer.

Bevorzugt sind Kohlenmonoxid/Ethylen/$C_3$- bis $C_{20}$-Alk-1-en-Terpolymere, wie Kohlenmonoxid/Ethylen/1-Buten-, Kohlenmonoxid/Ethylen/1-Hexen-, Kohlenmonoxid/Ethylen/1-Octen- und insbesondere Kohlenmonoxid/Ethylen/Propen-Terpolymere. Der auf Ethylen zurückzuführende Gehalt an Struktureinheiten in den Kohlenmonoxid/Ethylen/$C_3$- bis $C_{20}$-Alk-1-en-Terpolymeren liegt im allgemeinem im Bereich von 0,1 bis 70 mol-%, vorzugsweise im Bereich von 15 bis 60 mol-% und insbesondere im Bereich von 20 bis 50 mol-%, bezogen auf das Terpolymer. Besonders gut geeignete Terpolymere mit diesen Ethylengehalten sind Kohlenmonoxid/Ethylen/Propen-Terpolymere.

Die Monomeren werden in die Terpolymere und höheren Copolymere im allgemeinen in alternierender Abfolge Kohlenmonoxid/Comonomer(e) eingebaut.

Das molare Verhältnis von Kohlenmonoxid zur Summe, der auf die olefinisch ungesättigten Monomeren zurückzuführenden Struktureinheiten in den erfindungsgemäßen binären und höheren Kohlenmonoxidcopolymeren, liegt im allgemeinen bei 1:1.

Die erfindungsgemäßen Copolymeren zeichnen sich durch ihre thermoplastisch elastomeren Eigenschaften bei relativ hoher Molmasse aus.

Die erfindungsgemäßen Copolymere sind beispielsweise löslich in Dichlormethan bei einer Temperatur im Bereich von 20°C bis 40°C, zeigen elastomeres Verhalten im Zug-/Dehnungsversuch, gemessen mit einer "Standard Universal Testing Machine Zwick 1445" wie in den Beispielen beschrieben und haben im allgemeinen eine Kristallitschmelztemperatur, gemessen mit der Methode der Differential Scanning Calorimetry (DSC), im Bereich von 40 bis 150°C.

Die mittleren Molekulargewichte Mw (Gewichtsmittelwert) der erfindungsgemäßen Kohlenmonoxid-Copolymeren, gemessen mit der Methode der Gelpermeationschromatographie (GPC) bei 25°C mit Microstyragel (Waters) als Säulenmaterial und Chloroform als Lösungsmittel, gegen Polystyrol-Standard, liegen im allgemeinen im Bereich von 80000 bis 1200000, bevorzugt 100000 bis 800000, insbesondere im Bereich von 100000 bis 600000.

Die Molekulargewichtsverteilung Mw/Mn (Gewichtsmittelwert/Zahlenmittelwert) der erfindungsgemäßen Copolymere, gemessen mit der Methode der Gelpermeationschromatographie (GPC) analog vorangegangener Beschreibung, beträgt im allgemeinen 1,5 bis 3,5.

Die Polymerisationen zur Herstellung der erfindungsgemäßen Kohlenmonoxid-Copolymeren können sowohl absatzweise als auch kontinuierlich in Gegenwart eines Polymerisationskatalysators aus A), bzw. a), b), c) und fakultativ B) durchgeführt werden.

Als Polymerisationskatalysatoren kommen Metallverbindungen der achten Nebengruppe des Periodensystems der Elemente (VIIIB) in Frage, die als definierte Metallkomplexe (I) oder (Ia), vorliegen können oder die in situ aus einem Metallsalz a) der Metalle der Gruppe VIIIB der Periodensysteme der Elemente, Protonen- und/oder Lewissäuren b) und einer Chelatverbindung b) der Formel (II) gebildet werden können. Gegebenenfalls können den Metallverbindungen Aktivatoren B) zugesetzt werden.

Als Metalle M eignen sich die Metalle der Gruppe VIIIB des Periodensystems der Elemente, also neben Eisen, Cobalt und Nickel vornehmlich die Platinmetalle wie Ruthenium, Rhodium, Osmium, Iridium und Platin sowie ganz besonders Palladium. Die Metalle liegen in den Komplexen im allgemeinen formal zweifach positiv geladen vor.

Als Elemente $E^1$ und $E^2$ des Chelatliganden, im folgenden auch Chelatverbindung (II) genannt, kommen die Elemente der V. Hauptgruppe des Periodensystems der Elemente (Gruppe VA), also Stickstoff, Phosphor, Arsen, Antimon oder Bismut in Betracht.

Besonders geeignet sind Stickstoff oder Phosphor, insbesondere Phosphor. Der Chelatligand oder die Chelatverbindung (II) kann unterschiedliche Elemente $E^1$ und $E^2$ enthalten, so zum Beispiel Stickstoff und Phosphor, vorzugsweise enthält er/sie jedoch gleiche Elemente $E^1$ und $E^2$ und insbesondere sind $E^1$ und $E^2$ Phosphor.

Die verbrückende Struktureinheit Z ist eine Atomgruppierung, die die beiden Elemente $E^1$ und $E^2$ miteinander verbindet. Ein Atom oder mehrere miteinander verbundene Atome aus der Gruppe IVA, VA oder VIA des Periodensystems der Elemente bilden üblicherweise die Brücke zwischen $E^1$ und $E^2$. Mögliche freie Valenzen dieser Brückenatome können mannigfaltig abgesättigt sein, so zum Beispiel durch Substitution mit Wasserstoff, Elementen aus der Gruppe IVA, VA, VIA oder VIIA des Periodensystems der Elemente. Diese Substituenten können untereinander oder mit dem Brückenatom Ringstrukturen bilden.

Gut geeignete verbrückende Struktureinheiten Z sind solche mit einem, zwei, drei oder vier Elementen aus der Gruppe IVA des Periodensystems der Elemente wie Methylen ($-CH_2-$), 1,2-Ethylen ($-CH_2-CH_2-$), 1,3-Propylen ($-CH_2-CH_2-CH_2-$), 1,4-Butylen, 1,3-Disilapropylen ($-R^5R^6Si-CH_2-SiR^5R^6-$, worin $R^5$, $R^6$ $C_1$- bis $C_{10}$-Alkyl, $C_6$- bis $C_{10}$-Aryl bedeuten), Ethyliden ($CH_3(H)C=$), 2-Propyliden ($(CH_3)_2C=$), Diphenylmethylen ($(C_6H_5)_2C=$) oder ortho-Phenylen.

Als besonders geeignete verbrückende Struktureinheiten seien 1,2-Ethylen, 1,3-Propylen und 1,4-Butylen genannt.

Als Kohlenstofforganische Reste $R^1$ bis $R^4$ kommen aliphatische sowie cycloaliphatische und aromatische mit 1 bis 20 C-Atomen in Betracht, beispielsweise die Methyl-, Ethyl-, 1-Propyl-, 1-Butyl-, 1-Pentyl, 1-Hexyl- und 1-Oetylgruppe. Ferner sind lineare Arylalkylgruppen mit jeweils 1 bis 10 C-Atomen im Alkylrest und 6 bis 20 C-Atomen im Arylrest geeignet, wie Benzyl. Als weitere Reste $R^1$ bis $R^4$ seien Arylreste genannt, zum Beispiel Tolyl, Anisyl und andere substituierte Phenylgruppen, insbesondere Phenyl.

Als cycloaliphatische Reste kommen $C_3$- bis $C_{10}$-monocyclische wie beispielsweise die Cyclopropyl-, Cyclobutyl-, Cyclopentyl-, Cyclohexylgruppen in Betracht, besonders bevorzugt ist Cyclohexyl.

Als verzweigte aliphatische Reste eignen sich $C_3$- bis $C_{20}$-, vorzugsweise $C_3$- bis $C_{12}$-Alkylreste, wie zum Beispiel die iso-Propyl-, iso-Butyl-, sec.-Butyl-, Neopentyl- und tert.-Butylgruppe.

Besonders geeignete verzweigte aliphatische Reste sind die tert.-Butylgruppe, die iso-Propylgruppe und die sec.-Butylgruppe.

Auch Alkylgruppen mit weiter außen liegender Verzweigung sind als Substituenten $R^1$ bis $R^4$ gut geeignet, wie die iso-Butyl-, die 3-Methyl-but-2-yl- und 4-Methylpentylgruppe.

Auf die chemische Natur der Reste $R^1$ bis $R^4$ kommt es nach den bisherigen Beobachtungen nicht entscheidend an, d.h. die Reste können auch Atome aus der Gruppe IVA, VA, VIA oder VIIA des Periodensystems der Elemente enthalten, wie zum Beispiel Halogen, Sauerstoff, Schwefel, Stickstoff, Silicium, hier beispielsweise die Bis(trimethylsilyl)methylgruppe. Auch funktionelle Gruppen, die sich unter den Polymerisationsbedingungen inert verhalten, kommen in diesem Zusammenhang in Betracht. Bevorzugte Heterosubstituenten $R^1$ bis $R^4$ sind $C_3$- bis $C_{30}$-Siliciumorganische Reste, das heißt tetravalente Siliciumatome die einerseits an $E^1$ oder $E^2$ gebunden sind und deren übrige Valenzen mit drei Kohlenstofforganischen Resten abgesättigt sind, wobei die Summe der Kohlenstoffatome dieser drei an Silicium gebundenen Reste im Bereich von drei bis dreißig liegt. Beispielsweise seien genannt die Trimethylsilyl-, tert.-Butyldimethylsilyl- oder Triphenylsilylgruppe, insbesondere die Trimethylsilylgruppe.

Vorzugsweise verwendet man als Chelatliganden oder Chelatverbindung (II), 1,2-Bis(diphenylphosphino) ethan, 1,3-Bis(diphenylphosphino)propan, 1,4-Bis(diphenylphosphino)butan.

Ganz besonders bevorzugte Verbindungen als Chelatligand oder Chelatverbindung (II) sind 1,3-Bis(diphenylphosphino)propan und 1,4-Bis(diphenylphosphino)butan.

Als formal ungeladene Liganden $L^1$, $L^2$ sind generell Lewisbasen geeignet, also Verbindungen, vorzugsweise organische Verbindungen oder Wasser, mit mindestens einem freien Elektronenpaar, wobei Alkanole oder Phenole im allgemeinen nicht geeignet sind.

Gut geeignet sind Lewisbasen, deren freies Elektronenpaar oder deren freie Elektronenpaare sich an einem Stickstoff- oder Sauerstoffatom befinden, also Nitrile, R-CN, Ketone, Ether oder vorzugsweise Wasser.

Als geeignete Lewisbasen seien genannt $C_1$- bis $C_{10}$-Nitrile wie Acetonitril, Propionitril, Benzonitril oder $C_3$- bis $C_{10}$-Ketone wie Aceton, Acetylaceton oder aber $C_2$- bis $C_{10}$-Ether, wie Dimethylether, Diethylether oder Tetrahydrofuran.

Insbesondere für Katalysatoren, die keines Aktivators B) bedürfen sind als Liganden $L^1$, $L^2$ in (I) oder (Ia) solche der Formel (III)

$$T\text{-}OH \qquad (III)$$

geeignet. Hierin bedeutet T Wasserstoff, oder ein mit einer lewisbasischen Gruppe versehener $C_1$- bis $C_{15}$-kohlenstofforganischer Rest. Gut geeignete $C_1$- bis $C_{15}$-kohlenstofforganische Reste T sind beispielsweise lineare oder auch cyclische $\{CH_2\}_n$-Einheiten, worin n 1 bis 10 bedeutet, also Methylen, 1,2-Ethylen, 1,3-Propylen, 1,4-Butylen, 1,5-Pentylen, 1,6-Hexylen, 1,7-Heptylen, 1,8-Octylen, 1,9-Nonylen oder 1,10-Decylen.

Als lewisbasische Gruppe kommen Ether, Ester, Keton, Amin, Phosphan und insbesondere Nitril ($-C\equiv N$) oder tertiäres Amin in Frage.

Gut geeignete Verbindungen T-OH sind zum Beispiel Wasser oder $\alpha$-$\omega$-Hydroxynitrile wie $NC\{CH_2\}_nOH$ mit n=1 bis 10 oder (2-Hydroxymethyl)tetrahydrofuran, sowie (2-Hydroxymethyl)(N-organo)pyrrolidine (IIIa) oder (2-Hydroxymethyl)(N-organo)piperidine (IIIb)

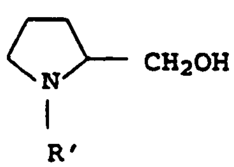

(IIIa)

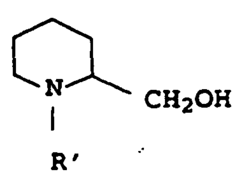

(IIIb)

worin R' $C_1$- bis $C_{10}$-Alkyl oder $C_3$- bis $C_{10}$-Cycloalkyl bedeutet, beispielsweise Methyl, Ethyl, n-Propyl, iso-Propyl, n-butyl, iso-Butyl, sec.-Butyl, tert.-Butyl, Cyclopentyl, Cyclohexyl.

Weiterhin kann R' auch $C_6$- bis $C_{10}$-Aryl, wie Phenyl, Naphthyl bedeuten.

Im allgemeinen sind die Liganden T-OH, außer Wasser, über die bereits definierte lewisbasische Gruppe an das Metall M in (I) oder (Ia) gebunden.

Nach dem derzeitigen Kenntnisstand ist es von Vorteil, wenn die Anionen X in (I) oder (Ia) möglichst wenig nucleophil sind, d.h. eine möglichst geringe Tendenz haben mit dem Zentralmetall M eine chemische Bindung einzugehen.

Geignete Anionen X in (I) oder (Ia) sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluoracetat, Perchlorat oder p-Toluolsulfonat als Anion X.

Die Substituenten und Indizes der Metallkomplexe (Ia) haben die, bereits für die Metallkomplexe (I) definierte, Bedeutung.

Als besonders gut geeignete Metallkomplexe (I) oder (Ia) seien genannt (Bis-1,3(diphenylphosphino)propanpalladium-bis-acetonitril)bis(tetrafluoroborat), (Bis-1,3(diphenylphosphino)-propan-palladium-bis-aquo)bis(tetrafluoroborat), (Bis-1,4(diphenylphosphino)butan-palladium-bis-acetonitril)bis(tetrafluoroborat), (Bis-1,4-(diphenylphosphino)butan-palladium-bis-aquo)bis(tetrafluoroborat).

Die Herstellung der Metallkomplexe der allgemeinen Formel (I) oder (Ia) erfolgt im allgemeinen nach literaturbekannten Verfahren wie zum Beispiel in Makromol. Chem. 1993, 194, S. 2579 beschrieben. Üblicherweise können Tetrakis-Ligand-Metallkomplexe, wie Tetrakis-Acetonitrilpalladiumbistetrafluoroborat, mit den Chelatverbindungen (II) und den Liganden $L^1$, $L^2$ oder TOH zu den Metallkomplexen (I) oder (Ia) umgesetzt werden. Ein bevorzugtes Verfahren zur Herstellung von Aquokomplexen (I) oder (Ia) ist die Umsetzung der chelatphosphan-Acetonitril-Metallkomplexe mit Wasser. Die Reaktion wird im allgemeinen in einem Lösungsmittel, beispielsweise Dichlormethan, Acetonitril, Wasser, bei Temperaturen im Bereich von (-)78 bis 40°C durchgeführt.

Bei der in situ Generierung der Polymerisationskatalysatoren setzt man die Metalle M üblicherweise zweiwertig in Form ihrer Salze ein und bringt sie mit der Chelatverbindung c) der allgemeinen Formel (II) und den Säuren b) in Berührung. Dies kann vor dem Kontakt der so erhältlichen katalytisch aktiven Masse mit dem Monomeren und gegebenenfalls weiterem Aktivator B) geschehen, im allgemeinen außerhalb des Polymerisationsreaktors. Die Umsetzung der Einzelkomponenten Metallsalz a), Chelatverbindung c) der allgemeinen Formel (II), Säure b) und gegebenenfalls Aktivatorkomponente B) kann aber auch im Polymerisationsreaktor, in Gegenwart der Monomeren, durchgeführt werden.

Als Salze von üblicherweise zweiwertigen Metallen M sind Halogenide, Sulfate, Phosphate, Nitrate und Carboxylate, wie Acetate, Propionate, Oxalate, Citrate, Benzoate, sowie Sulfonsäuresalze wie zum Beispiel Methylsulfonate, Trifluormethylsulfonat und para-Toluolsulfonat geeignet. Vorzugsweise verwendet man Carboxylate, Sulfonsäurederivate und insbesondere Acetate.

Besonders geeignete Katalysatorkomponenten a) sind Palladiumdicarboxylate, vorzugsweise Palladiumdiacetat, Palladiumdipropionat, Palladiumbis(trifluoracetat) und Palladiumoxalat, sowie Palladiumsulfonate, vorzugsweise Palladiumbis(trifluormethansulfonat), Palladiumbis(methansulfonat), Palladiumbis(p-Toluolsulfonat), insbesondere verwendet man Palladiumdiacetat.

Als Katalysatorbestandteile b) können Lewis- und Protonensäuren und deren Mischungen eingesetzt werden.

Geeignete Protonensäuren b) sind starke Mineralsäuren, vorzugsweise mit einem pKa-Wert kleiner als 3, wie Schwefelsäure und Perchlorsäure sowie starke organische Säuren, beispielsweise Trichlor- und Trifluoressigsäure, sowie aus den Sulfonsäuren Methansulfonsäure, p-Toluolsulfonsäure und Benzolsulfonsäure.

Weiterhin sind die sauer wirkenden Salze starker Säuren mit schwachen Basen, wie beispielsweise Ammoniumsalze der vorher genannten Säuren geeignet.

Beispiele für geeignete Lewissäuren sind Halogenide der Elemente der Gruppe IIIA des Periodensystems der Elemente, zum Beispiel Bortrifluorid, Bortrichlorid, Aluminiumtrifluorid, Aluminiumtrichlorid, Halogenide der Elemente der Gruppe VA des Periodensystems der Elemente wie Phosphorpentafluorid, Antimonpentafluorid, sowie Halogenide der Metalle der Nebengruppe IVB des Periodensystems der Elemente, wie beispielsweise Titantetrachlorid oder Zirconiumtetrachlorid. Weitere geeignete Lewissäuren sind organisch substituierte Lewissäuren, zum Beispiel Tris (pentafluorphenyl)boran.

Vorzugsweise verwendet man als Lewis-Säuren Bortrifluorid, Antimonpentafluorid oder Tris(pentafluorphenyl)boran.

Besonders bevorzugte Komponenten b) sind solche, welche ein schwach koordinierendes konjugiertes Anion besitzen, d.h. ein Anion welches nur eine schwache Bindung zum Zentralmetall des Komplexes ausbildet, wie Tetrafluoroborat, Hexafluorophosphat, Perchlorat,Trifluoracetat, Trifluormethylsulfonat, p-Tosylat und Borate wie z.B. Brenzkatechinatoborat.

Im übrigen eignen sich als Katalysatorkomponenten a) und b) diejenigen, wie sie allgemein für Systeme mit Bisphosphinen aus den EP-A 501 576 und 516 238 bekannt sind.

Als Komponente c) enthalten die Katalysatorsysteme eine Chelatverbindung $R^1R^2E^1$-Z-$E^2R^3R^4$ (II), die bereits bei der Abhandlung der Metallkomplexe (I) beschrieben wurde.

Das Verhältnis der Katalysatorbestandteile a), b) und c) zueinander wird im allgemeinen so gewählt, daß das molare Verhältnis der Metallverbindung a) zur Säure b) 0,01 : 1 bis 100 : 1, bevorzugt 0,1 : 1 bis 1 : 1 und das molare Verhältnis der Metallverbindung a) zur Komponente c) 0,01 : 1 bis 10 :1, bevorzugt 0,1 : 1 bis 2 : 1 beträgt.

Die Aktivatorkomponente B) ist in der Regel eine chemische Verbindung die mindestens eine Hydroxylgruppe im Molekül enthält. Hierunter fallen vor allem $C_1$- bis $C_{10}$-Alkohole, wie Methanol, Ethanol, n-Propanol, i-Propanol, n-Butanol, iso-Butanol, sec-Butanol, tert.-Butanol, n-Hexanol, n-Octanol, n-Decanol, Cyclohexanol, Phenol oder wasser. Vorzugsweise verwendet man Methanol und/oder Wasser als Aktivatorkomponente B).

Das molare Verhältnis von Aktivatorkomponente B) zu Metall M liegt im Bereich von 0 bis 500, vorzugsweise im Bereich von 0 bis 300. Es hat sich als vorteilhaft herausgestellt, das Maximalverhältnis bei der Polymerisationsreaktion nicht zu überschreiten, da sonst die mittleren Molekulargewichte Mw der gebildeten Kohlenmonoxid-Copolymeren zu gering sein können.

Unvorhergesehen hat sich gezeigt, daß man praktisch keinen Aktivator B) zusetzen muß, wenn der Katalysator als Lewisbasen-Liganden $L^1$, $L^2$ solche enthält, die eine Hydroxylgruppe im Molekül enthalten und die vorher mit der allgemeinen Formel T-OH (III) genauer definiert worden sind.

Als geeignete Reaktionsparameter zur Herstellung der linearen thermoplastischen elastomeren Copolymeren aus Kohlenmonoxid und olefinisch ungesättigten Verbindungen haben sich Drücke von 100 bis 500000 kPa, vorzugsweise 500 bis 350000 kPa und insbesondere 1000 bis 10000 kPa, Temperaturen von (-50) bis 400°C, bevorzugt 10 bis 250°C und insbesondere 20 bis 100°C als geeignet erwiesen.

Die Polymerisationsreaktionen lassen sich in der Gasphase in Suspension, in flüssigen und in überkritischen Monomeren und insbesondere in, unter den Polymerisationsbedingungen inerten, Lösungsmitteln durchführen.

Die Polymerisationsreaktionen können im praktisch alkohol- oder wasserfreien Polymerisationsmedium durchgeführt werden. Das bedeutet, daß dem Reaktionsgemisch aus Monomeren, Katalysator und gegebenenfalls inertem Lösungs- oder Suspensionsmittel, außer gegebenenfalls der Aktivatorkomponente B), keine weitere Alkohol- oder Wassermenge zugesetzt wurde oder wird.

Geeignete inerte Lösungsmittel sind solche die keine Hydroxylgruppe im Molekül enthalten, also Ether wie Diethylether, Tetrahydrofuran, aromatische Lösungsmittel wie Benzol, Toluol, Ethylbenzol, Chlörbenzol oder vorzugsweise chlorierte aliphatische Kohlenwasserstoffe wie Dichlormethan, 1,1,1-Trichlormethan oder Gemische der genannten Lösungsmittel.

Als gut geeignetes Polymerisationsverfahren hat sich die Vorlage des Katalysators im inerten Lösungsmittel, gegebenenfalls anschließende Zugabe der Aktivatorkomponente B) und die anschließende Zugabe der Monomeren und Polymerisation bei einer Temperatur im Bereich von 20 bis 100°C und einem Druck im Bereich von 1000 bis 10000 kPa herausgestellt.

Die erfindungsgemäßen Kohlenmonoxid-Copolymeren eignen sich zur Herstellung von Fasern, Folien und Formkörpern, insbesondere solchen, die schlagzäh sein sollen. Weiterhin sind sie als Mischkomponente in Kunststoffen, insbesondere in solchen, welche schlagzäh sein sollen, verwendbar.

Beispiele und Vergleichsbeispiele 1 bis 8

Allgemeine Polymerisationsbedingungen

In einem 0,3 l-Stahlautoklaven wurden 100 ml Dichlormethan und 35 mg der Palladiumverbindung, sowie gegebenenfalls die gewünschte Menge der Aktivatorkomponente B), vorgelegt. Danach wurde bei der gewählten Reaktionstemperatur ein Gemisch aus Propen (40 g, 0,95 mol) und Kohlenmmonoxid (5,0 g, 0,18 mol) zu dem Gesamtdruck von 6000 kPa aufgepresst.

Im Falle der Terpolymeren (Versuch 7, 8) wurden 40 g Propen, 2 g Ethylen und 5 g Kohlenmonoxid (Versuch 7) oder 40 g Propen, 1 g Ethylen und 5 g Kohlenmonoxid (Versuch 8) zu dem Gesamtdruck von 6000 kPa aufgepreßt.

Es wurde bei 25°C 30 Stunden polymerisiert. Die Temperatur und die Partialdrücke der Monomeren wurden während der gesamten Reaktionsdauer konstant gehalten. Die Polymerisation wurde durch Druckverminderung auf Umgebungsdruck abgebrochen, das Reaktionsgemisch mit salzsaurem Methanol versetzt, filtriert, vom Filtrat das Lösungsmittel entfernt und das Polymere isoliert. Die Versuchsparameter sind der Tabelle 1, die Polymereigenschaften der Tabelle 2 zu entnehmen.

Durchführung der Zug-/Dehnungsversuche:

Die Zug-/Dehnungsversuche wurden mit einem Testgerät "Standard Universal Testing Machine Zwick 1445" durchgeführt.

Hinzu wurden Probefolien durch Auflösen der in den Versuchen 1 bis 8 erhaltenen Polymeren in Dichlormethan und Verdunsten des Lösungsmittels hergestellt. Für die Messung wurden Teststreifen (Breite 2 mm x Dicke 0,5 mm x Länge 9 mm) herausgestanzt.

Die Zug-/Dehnungsmessungen wurden bei Raumtemperatur mit einer Zuggeschwindigkeit von 10 mm/min durchgeführt. Dabei wurde der Weg optisch gemessen.

Für die erfindungsgemäßen Polymere wurden hierbei Meßkurven erhalten, die für Elastomere charakteristisch sind (Vergleichsmessung mit vulkanisiertem Polyisopren) .

Tabelle 1:

| Versuchsparameter (V hinter der Versuchsnummer stellt einen Vergleichsversuch dar) | | | | |
|---|---|---|---|---|
| Nr. | Komplex, mg | Aktivator B), ml | Molares Verhältnis Aktivator B): Komplex | Aktivität g Copolymer/$(gPdxh)^{-1}$ |
| 1 | (Ia), 35 | Methanol, 0,25 | 137 :1 | 55,5 |
| 2V | (Ia), 35 | Methanol, 2,00 | 1096 :1 | 62,9 |
| 3 | (Ia), 35 | Wasser, 0,001 | 1,23 :1 | 10,4 |
| 4 | (Ia), 35 | Wasser, 0,25 | 307 :1 | 51,9 |
| 5V | (Ia), 35 | Wasser, 2,00 | 2456 :1 | 3,47 |
| 6 | (Ib), 35 | --- | --- | 27,0 |
| 7a) | (Ia), 35 | Wasser, 0,125 | 154 :1 | 43,3 |
| 8a) | (Ia), 35 | Wasser, 0,125 | 154 :1 | 21,7 |

(Ia) [1,3-Bis-(diphenylphosphino)propanPd$(CH_3CN)_2$] $[BF_4]_2$
(Ib) [1,3-Bis-(diphenylphosphino)propanPd$(OH_2)_2$] $[BF_4]_2$
a) Terpolymere aus Propylen, Ethylen und Kohlenmonoxid

Tabelle 2:

| Polymereigenschaften | | | |
|---|---|---|---|
| Nr. | Mw; Mw/Mn | Tg/Tm c) °C | Elastomer a) |
| 1 | 230000; 2,02 | 20,4/67,9; 100 | Ja |
| 2V | 36000; 2,35 | n.b. | Nein |
| 3 | 110000; 3,25 | 19,6/n.b. | Ja |
| 4 | 200000; 1,87 | 15,3/44,9; 90,2 | Ja |
| 5V | 13000; 1,21 | n.b. | Nein |
| 6 | 220000; 1,85 | 17,9/55.6 | Ja |
| 7b) | 411000; 2,30 | 9,8/46,9; 56,9 | Ja |
| 8b) | 589000; 3,02 | 21,7/44,8; 70,9 | Ja |

a) Die Elastomereigenschaft wurde mittels Zug-/Dehnungsversuch (s.o.) bestimmt.
b) Terpolymere aus Propylen, Ethylen und Kohlenmonoxid
c) Tg= Glasübergangstemperatur, Tm= Schmelzpunkt(e)

Beispiel 9

Darstellung von Bis(aquo)-{1,3-bis(diphenylphosphino)propan}-Palladium(II)tetrafluoroborat Komplex:

Eine Suspension von [Pd(1,3-bis(diphenylphosphino)propan) $(NCCH_3)_2$] $(BF_4)_2$ (0,50 g, 0,65 mmol) in 50 ml

$H_2O$ wurde bei Raumtemperatur 5 h gerührt. Danach wurde das Lösungsmittel abdekantiert und der Rückstand mit 100 ml Diethylether/n-Pentan (1:1) gewaschen. Der als gelbliches Pulver 0,46 g (98 %) verbleibende Diaquakomplex wurde im Vakuum getrocknet. Anal. für $C_{27}H_{30}P_2O_2PdB_2F_8$, Ber. C,44.52, H, 4.15 Gef. C,45.1, H, 4.29.; $^1$H-NMR (250 MHz, $D_6$-Aceton, ppm): δ 7.92-7.43 (m, 20H, Harom.), 3.18(m, 4H), 2.39 (m, 2H). IR (KBr, cm-1): ν($BF_4$)= 1062 (S, br).

**Patentansprüche**

**1.** Verfahren zur Herstellung von linearen, thermoplastischen, elastomeren Copolymeren aus Kohlenmonoxid und olefinisch ungesättigten Verbindungen mit alternierender Sequenz der Wiederholeinheiten und einem mittleren Molekulargewicht Mw der Copolymeren im Bereich von 80000 bis 1200000, wobei binäre, lineare, alternierende Kohlenmonoxid/Ethylencopolymere ausgeschlossen sind, durch Copolymerisation von Kohlenmonoxid mit olefinisch ungesättigten Verbindungen in einem praktisch alkohol- oder wasserfreien Polymerisationsmedium in Gegenwart eines Katalysators dessen aktive Masse gebildet wird aus

A) einem Metallkomplex der allgemeinen Formel (I)

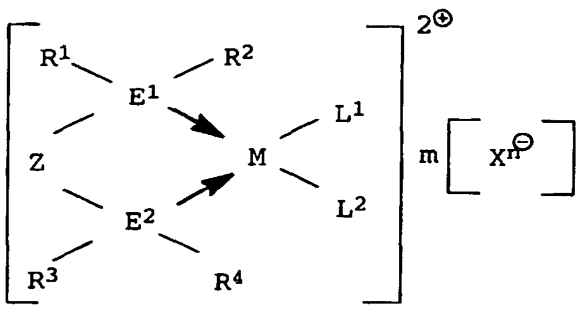

in der die Substituenten und Indizes folgende Bedeutung haben:

| | |
|---|---|
| M | ein Metall aus der Gruppe VIIIB des Perioden- systems der Elemente |
| $E^1$, $E^2$ | ein Element aus der Gruppe VA des Periodensy- stems der Elemente, |
| Z | eine verbrückende Struktureinheit aus einer, zwei, drei oder vier Substruktureinheiten von Elementen der Gruppe IVA, VA, VIA des Perio- densystems der Elemente, |
| $R^1$ bis $R^4$ | Substituenten, ausgewählt aus der Gruppe be- stehend aus $C_1$- bis $C_{20}$-Kohlenstofforganischen und $C_3$- bis $C_{30}$-Siliciumorganischen Resten, wo- bei die Reste ein Element oder mehrere Elemente der Gruppe IVA, VA, VIA und VIIA des Pe- riodensystems der Elemente enthalten können, |
| $L^1$, $L^2$ | formal ungeladene Lewis-Basenliganden |
| X | ein- oder zweiwertige Anionen |
| m, n | 1 oder 2 |

wobei m x n= 2

B) einer Aktivatorkomponente, welche eine Hydroxylgruppe im Molekül enthält,

**dadurch gekennzeichnet, daß** man 0 bis 500 Moläquivalente, bezogen auf M in (I), der Aktivatorkomponente B) verwendet.

**2.** Verfahren zur Herstellung von linearen, thermoplastischen, elastomeren Copolymeren aus Kohlenmonoxid und olefinisch ungesättigten Verbindungen mit alternierender Sequenz der Wiederholeinheiten und einem mittleren

Molekulargewicht Mw der Copolymeren im Bereich von 80000 bis 1200000, wobei binäre, lineare, alternierende Kohlenmonoxid/Ethylencopolymere ausgeschlossen sind, durch Copolymerisation von Kohlenmonoxid mit olefinisch ungesättigten Verbindungen in einem praktisch alkohol- oder wasserfreien Polymerisationsmedium in Gegenwart eines Katalysators dessen aktive Masse gebildet wird aus

a) einem Salz eines Metalls M der Gruppe VIII B des Periodensystems der Elemente,

b) einer Verbindung oder mehreren Verbindungen ausgewählt aus der Gruppe der Protonensäuren und Lewissäuren,

c) einer Chelatverbindung der allgemeinen Formel (II)

$$R^1R^2E^1\text{-}Z\text{-}E^2R^3R^4 \qquad \text{(II)}$$

in der die Substituenten und Indizes folgende Bedeutung haben:

$E^1$, $E^2$ ein Element aus der Gruppe VA des Periodensy- stems der Elemente,

Z eine verbrückende Struktureinheit aus einer, zwei, drei oder vier Substruktureinheiten von Elementen der Gruppe IVA, VA, VIA des Perio- densystems der Elemente,

$R^1$ bis $R^4$ Substituenten ausgewählt aus der Gruppe der $C_1$- bis $C_{20}$-Kohlenstofforganischen und $C_3$- bis $C_{30}$-Siliciumorganischen Reste, wobei die Reste ein Element oder mehrere Elemente der Gruppe IVA, VA, VIA und VIIA des Periodensystems der Elemente enthalten können,

B) einer Aktivatorkomponente, welche eine Hydroxylgruppe im Molekül enthält

**dadurch gekennzeichnet, daß** man 0 bis 500 Moläquivalente, bezogen auf M in (I), der Aktivatorkomponente B) verwendet.

**3.** Verfahren nach Anspruch 2, **dadurch gekennzeichnet, daß** $L^1$, $L^2$ in (I) Liganden der allgemeinen Formel

$$T\text{-}OH \qquad \text{(III)}$$

mit T = Wasserstoff, $C_1$- bis $C_{15}$-Kohlenstofforganischer Rest mit einer lewisbasischen Gruppe sind und keine Aktivatorkomponente B) verwendet wird.

**4.** Verfahren nach den Ansprüchen 1 bis 3, **dadurch gekennzeichnet, daß** $E^1$ und $E^2$ Phosphor bedeutet.

**5.** Copolymere, erhältlich nach einem Verfahren gemäß einem der Ansprüche 1 bis 4.

## Claims

**1.** A process for the preparation of linear, thermoplastic, elastomeric copolymers of carbon monoxide and olefinically unsaturated compounds having an alternating sequence of repeating units and an average molecular weight Mw of the copolymers of from 80 000 to 1 200 000, binary, linear, alternating carbon monoxide/ethylene copolymers being excluded, by copolymerization of carbon monoxide with olefinically unsaturated compounds in a virtually alcohol-free or anhydrous polymerization medium in the presence of a catalyst whose active material is formed from

A) a metal complex of the general formula (I)

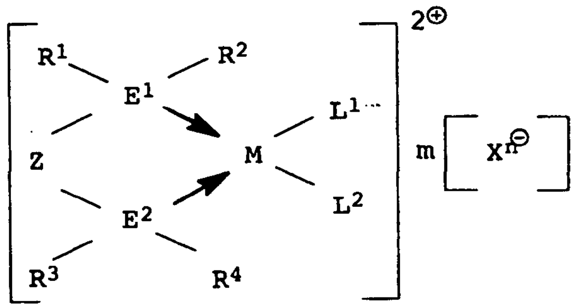

(I)

where:

M is a metal from group VIIIB of the Periodic Table of Elements,

$E^1$, $E^2$ are each an element from group VA of the Periodic Table of Elements,

Z is a bridging structural unit comprising one, two, three or four structural units of elements of group IVA, VA, VIA of the Periodic Table of Ele- ments,

$R^1$ to $R^4$ are substituents selected from the group consi- sting of $C_1$- to $C_{20}$-organocarbon and $C_3$- to $C_{30}$-or- ganosilicon radicals, where the radicals may comprise one element or a plurality of elements from groups IVA, VA, VIA and VIIA of the Periodic Table of Elements,

$L^1$, $L^2$ are formally uncharged Lewis base ligands,

X is a monovalent or divalent anion,

m, n are each 1 or 2 and

m x n = 2,
and

B) an activator component which comprises a hydroxyl group in the molecule,

wherein from 0 to 500 mole equivalents, based on M in (I), of the activator component B) are used.

**2.** A process for the preparation of linear, thermoplastic, elastomeric copolymers of carbon monoxide and olefinically unsaturated compounds having an alternating sequence of repeating units and an average molecular weight Mw of the copolymers of from 80 000 to 1 200 000, binary, linear, alternating carbon monoxide/ethylene copolymers being excluded, by copolymerization of carbon monoxide with olefinically unsaturated compounds in a virtually alcohol-free or anhydrous polymerization medium in the presence of a catalyst whose active material is formed from

a) a salt of a metal M of group VIIIB of the Periodic Table of Elements,

b) a compound or a plurality of compounds selected from the group consisting of the protic acids and Lewis acids and

c) a chelate compound of the general formula (II)

$$R^1R^2E^1\text{-}Z\text{-}E^2R^3R^4 \quad \text{(II)}$$

where:

$E^1$, $E^2$ are each an element from group VA of the Perio- dic Table of Elements,

Z is a bridging structural unit comprising one, two, three or four structural units of elements of group IVA, VA or VIA of the Periodic Table of Elements and

$R^1$ to $R^4$ are substituents selected from the group consi- sting of $C_1$- to $C_{20}$-organocarbon and $C_3$- to $C_{30}$-organosilicon radicals, where the radicals may comprise an element or a plurality of ele- ments of group IVA, VA, VIA and VIIA of the Pe- riodic Table of Elements, and

B) an activator component which comprises a hydroxyl group in the molecule,

wherein from 0 to 500 mole equivalents, based on M in (I), of the activator component B) are used.

**3.** The process according to claim 2, wherein $L^1$ and $L^2$ in (I) are ligands of the general formula

$$T\text{-}OH \qquad (III)$$

where T = hydrogen or $C_1$- to $C_{15}$-organocarbon radical having a Lewis base group, and no activator component B) is used.

**4.** The process according to any of claims 1 to 3, wherein $E^1$ and $E^2$ are each phosphorus.

**5.** A copolymer obtainable by a process according to any of claims 1 to 4.

**Revendications**

**1.** Procédé de préparation de copolymères élastomères thermoplastiques, linéaires, à base de monoxyde de carbone et de composés oléfiniquement insaturés présentant une séquence alternée des unités répétitives et un poids moléculaire moyen Mw des copolymères de l'ordre de 80 000 à 1 200 000, des copolymères de monoxyde de carbone/éthylène alternés, linéaires, binaires étant exclus, par copolymérisation de monoxyde de carbone avec des composés oléfiniquement insaturés dans un milieu de polymérisation pratiquement exempt d'alcool ou d'eau, en présence d'un catalyseur dont la masse active est formée

A) d'un complexe métallique de la formule générale (I) :

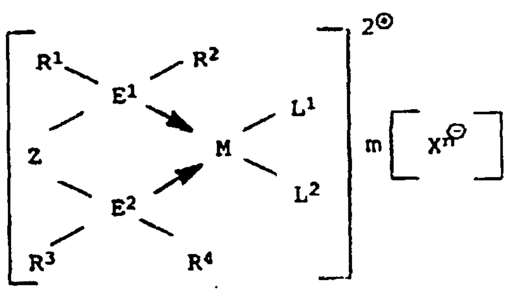

(I)

dans laquelle les substituants et indices ont la signification suivante :

M est un métal du groupe VIIIB du système périodique des éléments,

$E^1$, $E^2$ représentent un élément du groupe VA du système périodique des éléments,

Z est une unité structurelle formant pont à base d'une, deux, trois ou quatre sous-unités structurelles d'éléments des groupes IVA, VA, VIA du système périodique des éléments,

$R^1$ à $R^4$ représentent des substituants choisis parmi le groupe constitué de radicaux organiques carbonés

en $C_1$-$C_{20}$ et organosiliciques en $C_3$-$C_{30}$, les radicaux pouvant contenir un ou plusieurs éléments des groupes IVA, VA, VIA et VIIA du système périodique des éléments,

$L^1$, $L^2$ représentent des ligands de bases de Lewis sans charge formelle,

X représente des anions monovalents ou divalents,

m, n valent 1 ou 2,

m x n = 2,

B) d'un composant activateur, qui contient un groupe hydroxyle dans la molécule,
**caractérisé en ce qu'**on utilise 0 à 500 équivalents molaires, par rapport à M dans (I), du composant activateur B).

**2.** Procédé de préparation de copolymères élastomères thermoplastiques, linéaires, à base de monoxyde de carbone et de composés oléfiniquement insaturés présentant une séquence alternée des unités répétitives et un poids moléculaire moyen Mw des copolymères de l'ordre de 80 000 à 1 200 000, des copolymères de monoxyde de carbone/éthylène alternés, linéaires, binaires étant exclus, par copolymérisation de monoxyde de carbone avec des composés oléfiniquement insaturés dans un milieu de polymérisation pratiquement exempt d'alcool ou d'eau, en présence d'un catalyseur dont la masse active est formée

a) d'un sel d'un métal M du groupe VIII B du système périodique des éléments,
b) d'un ou de plusieurs composés choisis parmi le groupe des acides protoniques et des acides de Lewis,
c) d'un composé de chélation de la formule générale (II) :

$$R^1R^2E^1\text{-}Z\text{-}E^2R^3R^4 \qquad \text{(II)}$$

dans laquelle les substituants et indices ont la signification suivante :

$E^1$, $E^2$ représentent un élément du groupe VA du système périodique des éléments,
Z est une unité structurelle formant pont à base d'une, deux, trois ou quatre sous-unités structurelles d'éléments des groupes IVA, VA, VIA du système périodique des éléments,
$R^1$ à $R^4$ représentent des substituants choisis parmi le groupe des radicaux organiques carbonés en $C_1$-$C_{20}$ et organosiliciques en $C_3$-$C_{30}$, les radicaux pouvant contenir un ou plusieurs éléments des groupes IVA, VA, VIA et VIIA du système périodique des éléments,

B) d'un composant activateur, qui contient un groupe hydroxyle dans la molécule,
**caractérisé en ce qu'**on utilise 0 à 500 équivalents molaires, par rapport à M dans (I), du composant activateur B).

**3.** Procédé suivant la revendication 2, **caractérisé en ce que** $L^1$, $L^2$ sont dans (I) des ligands de la formule générale :

$$T\text{-}OH \qquad \text{(III)}$$

où T = de l'hydrogène, un radical organique carboné en $C_1$-$C_{15}$ présentant un groupe de base de Lewis,
et on n'utilise pas de composant activateur B).

**4.** Procédé suivant les revendications 1 à 3, **caractérisé en ce que** $E^1$ et $E^2$ représentent du phosphore.

**5.** Copolymères que l'on peut obtenir suivant un procédé selon l'une des revendications 1 à 4.